# EUROPEAN PATENT SPECIFICATION

(11) **EP 3 190 221 B1**
(45) Date of publication and mention of the grant of the patent: **06.02.2019**
(21) Application number: 16205056.1
(22) Date of filing: 19.12.2016
(51) Int. Cl.: D06F 39/02

(54) **LAUNDRY TREATING APPARATUS HAVING DETERGENT INSERT DOOR**
WÄSCHEBEHANDLUNGSVORRICHTUNG MIT EINEM TÜREINSATZ FÜR WASCHMITTEL
APPAREIL DE TRAITEMENT DU LINGE AVEC UN ACCESSOIRE DE PORTE POUR LE DÉTERGENT

(30) Priority: 05.01.2016 KR 20160001208
(43) Date of publication of application: 12.07.2017
(73) Proprietor: LG ELECTRONICS INC., Yeongdeungpo-gu, Seoul, 07336 (KR)
(72) Inventor: JUNG, Sungwoon, 08592 Seoul (KR); JANG, Hunjun, 08592 Seoul (KR)
(74) Representative: Vossius & Partner Patentanwälte Rechtsanwälte mbB

(56) References cited:
- EP-A1- 2 708 633
- FR-A1- 2 470 230
- KR-A- 20150 008 035
- US-A1- 2011 062 837
- US-A1- 2011 174 021

## Description

The present disclosure relates to a laundry treating apparatus having a door for inserting detergent.

A laundry treating apparatus is an apparatus for putting clothes, bedding, and the like (hereinafter, referred to as laundry) into a drum to remove contamination on laundry. The laundry treating apparatus may perform the processes of washing, rinsing, dehydration, drying and the like. The laundry treating apparatus may be typically configured to include a body that forms an external appearance, a tub accommodated into the body, a drum rotatably mounted within the tub to put laundry thereinto, and a detergent supply apparatus configured to supply detergent into the drum.

The laundry treating apparatus is divided into a top loading type and a front loading type based on the type of putting laundry into the drum. A front loading type washing machine is typically referred to as a drum washing machine, and in recent years, a drum washing machine having an additional sub-drum at a lower end of the body to wash a small amount of laundry as well as a drum washing machine having only one drum in the body have been marketed and used.

In the related art, the drum washing machine is typically configured in such a manner that a detergent inlet is located at an upper portion of the body, and a detergent insert container is taken out by pulling out the detergent inlet to withdraw it to a front surface of the body. However, such a method has a drawback in which it is difficult to supply a large amount of detergent through the detergent inlet, and the detergent dispenser is located at an upper side of the drum in the body on which the line of sight is focused and thus aesthetically not good.

In a drum washing machine according to the present disclosure, a detergent container receiving portion for the insertion of a container for receiving detergent in a liquid phase is located at a lower portion thereof to supply detergent required for the washing process to the drum. The detergent container receiving portion is divided into a detergent container inlet into which a detergent container is inserted and a filter inlet into which a filter is inserted, and a detergent insert door is provided on the laundry treating apparatus, thereby allowing a user to open or close them as needed.

Even in the related art, there exists a case where a detergent inlet is located at a lower portion of the body, but detergent has been supplied to the drum in a drawing manner of withdrawing a detergent container and a frame having the same through a grip other than a manner of opening or closing a detergent insert door to insert the detergent container, and a method of mounting the detergent container through a rail located at a lower portion or lateral surface of the frame has been used.

As illustrated in the present disclosure, when a method of inserting the detergent container at a lower portion of the laundry treating apparatus is employed, the detergent insert door may be provided near the floor, and the detergent insert door may be bumped against the floor as the detergent insert door is opened to cause scratches or damage as well as generating noise while being bumped. Furthermore, the detergent insert door may be against the floor to cause a problem of being damaged due to being stepped on by the user's foot.

In order to solve the foregoing problem, the need of a detergent insert door configured to be opened only up to a predetermined angle even when the detergent insert door is opened to thereby be located and separated from the floor by a predetermined distance is required.

EP 2 708 633 A1 is directed to providing a laundry treating apparatus including a cabinet provided with an opening communicating with an outside of the cabinet and an introduction port for introduction of laundry, a tub arranged in the cabinet to store washing water therein and provided with a tub introduction port communicating with the introduction port, and a detergent supply module including a module door to open and close the opening, a container provided to the module door or the cabinet to store a detergent, and a detergent pump to move the detergent stored in the container to the tub.

An aspect of the present disclosure is to propose the structure of a detergent insert door for opening a detergent inlet to insert a detergent container.

Another aspect of the present disclosure is to propose the structure of a detergent insert door capable of allowing an upper portion of the detergent insert door to be separated from the floor by a predetermined distance and then supported when the detergent insert door rotates to open a detergent inlet.

Still another aspect of the present disclosure is to propose the structure of a detergent insert door capable of rotating at a limited speed up to a predetermined angle, and limiting further rotation when reaching a preset angle.

These objects are achieved with the features of the claims.

In order to accomplish the foregoing tasks of the present disclosure, a laundry treating apparatus having a detergent insert door according to an embodiment of the present disclosure may include a detergent container receiving portion provided at a lower portion of a body, and provided with a front opening portion to insert a detergent container; and a detergent insert door rotatably provided on a front surface of the detergent container receiving portion to open or close the detergent container receiving portion, wherein the detergent insert door includes a bracket coupled to the front opening portion to allow a detergent inlet formed on a front surface thereof to communicate with the front opening portion, and provided with a hinge receiving portion at a lower portion thereof; a cover inserted into the hinge receiving portion and coupled to the bracket to open or close the detergent inlet; a shaft damper coupled to a hinge shaft at one side of the bracket to limit a rotation speed of the cover up to a set angle; and an elastic member supported by the bracket and the cover to provide an elastic force in an opposite direction of rotation when the cover rotates above a set angle based on the bracket.

According to an example associated with the present disclosure, the cover may include a first member configured to form an appearance of the detergent insert door, and provided with bracket supporting portions protruded and formed toward the bracket at both ends thereof; and a second member adhered to a rear surface of the first member to reinforce a strength of the first member, and provided with the hinge shaft at a lower portion thereof.

Here, the bracket supporting portion may include a rotation protrusion protruded and formed toward a central portion of the first member at one side thereof, and formed to be accommodated into the bracket for the rotation of the cover.

Furthermore, the second member may include at least one or more hinge coupling portions protruded and formed toward the detergent container receiving portion at a lower portion thereof to be inserted into the hinge receiving portion.

Here, the hinge coupling portion may include a protruding portion inserted into the hinge receiving portion; a shaft protrusion supported by the bracket, and extended along a direction of the hinge shaft at one side of the protruding portion to insert the elastic member; and a shaft damper protrusion receiving portion configured in a groove shape and formed at the other side of the protruding portion to accommodate one end of the shaft damper.

Furthermore, the protruding portion may include an elastic member supporting portion configured in a groove shape to accommodate and support the elastic member at one side thereof.

Furthermore, an end of the elastic member may be fixed to the elastic member supporting portion, and the other end thereof may be brought into contact with one side of the bracket due to rotation above a set angle of the cover to limit the rotation of the cover.

According to an example associated with the present disclosure, the hinge receiving portion may be configured in a depressed shape from the bottom to the top to hinge-couple the cover to the bracket.

Here, a cover supporting hole formed to support and rotate the cover may be provided at one side of the hinge receiving portion.

Furthermore, a shaft damper insert hole formed to allow the shaft damper to pass therethrough may be provided at the other side of the hinge receiving portion.

Here, the shaft damper may be coupled to the hinge coupling portion through the shape damper insert hole to limit a rotation speed of the cover.

According to an example associated with the present disclosure, the elastic member may be either one of a coil spring and a leaf spring.

According to an example associated with the present disclosure, a ring portion protruded and formed to be coupled and fixed to the bracket may be provided at an upper end of the second member.

According to the present disclosure having the foregoing configuration, an upper portion of the detergent insert door may rotate with respect to a hinge at a lower portion thereof to allow the opening of the detergent inlet, thereby inserting or withdrawing the detergent container into or from the detergent inlet.

According to the present disclosure having the foregoing configuration, the detergent insert door may rotate at a limited speed by a predetermined angle by the shaft damper, and then further rotation may be limited by the elastic member, thereby preventing it from being collided with the floor or the sub-drum.

Furthermore, according to the present disclosure having the foregoing configuration, the detergent insert door may be located to be separated from the floor or the sub-drum by a predetermined distance even when the detergent insert door is rotated to open the detergent inlet, thereby allowing a user to easily hold and open or close the detergent insert door.

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a perspective view illustrating a laundry treating apparatus including a detergent insert door;
FIG. 2 is a perspective view illustrating a shape in which a detergent insert door is opened;
FIG. 3 is a side view in which the detergent insert door in FIG. 2 is seen from one side;
FIG. 4 is a perspective view illustrating a shape in which a detergent insert door is closed;
FIG. 5 is a side view in which FIG. 4 is seen from one side;
FIG. 6 is an exploded view illustrating each configuration of a detergent insert door;
FIG. 7 is a perspective view illustrating a first member and a second member constituting a cover;
FIG. 8 is a perspective view illustrating a shape in which a hinge coupling portion and a shaft damper are inserted into a rear surface of a bracket;
FIG. 9 is a view illustrating a relationship between a hinge coupling portion, an elastic member and a shaft damper located at a hinge receiving portion as a cover rotates;
FIG. 10 is a cross-sectional view in which FIG. 9 is cut in a horizontal direction;
FIG. 11 is a view illustrating a shape in which a cover portion is supported by a bracket due to a coil spring and an example of the coil spring;
FIG. 12 is a view illustrating a shape in which a cover portion is supported by a bracket due to a leaf spring and an example of the leaf spring;
FIG. 13 is a perspective view illustrating a shape of a detergent insert door when a sub-drum is located at a lower portion of the body; and
FIG. 14 is a side view in which FIG. 13 is seen from one side.

Hereinafter, a laundry treating apparatus having a detergent insert door associated with the present disclosure will be described in more detail with reference to the accompanying drawings.

Even in different embodiments according to the present disclosure, the same or similar reference numerals are designated to the same or similar configurations, and the description thereof will be substituted by the earlier description. Unless clearly used otherwise, expressions in the singular number used in the present disclosure may include a plural meaning.

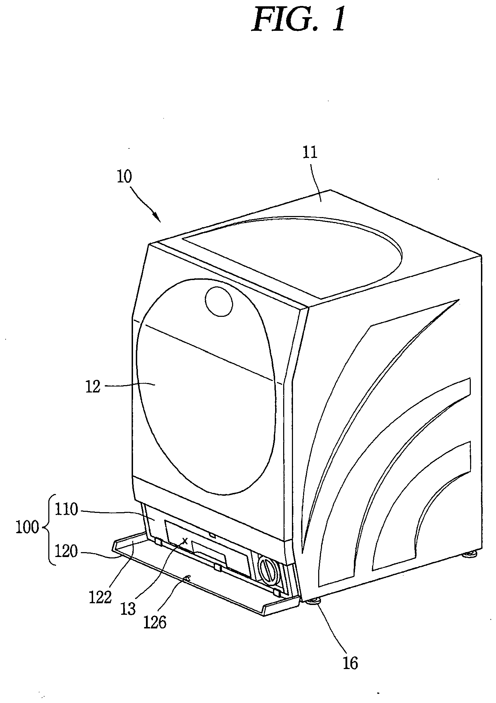

FIG. 1 is a perspective view illustrating a laundry treating apparatus including a detergent insert door 100.

The laundry treating apparatus may include a body 11 configured to form an appearance, a drum rotatably mounted within the body 11 to insert laundry, a detergent container receiving portion 18 configured to receive a detergent container to supply detergent to the drum, and a body supporting member 16 configured to support the body 11 from the bottom. Furthermore, the laundry treating apparatus has a detergent insert door 100 located on a front surface of the detergent container receiving portion 18. The detergent insert door 100 forms the opening or closing of the detergent container receiving portion 18 as the cover 120 rotates with respect to the bottom.

In other words, the detergent insert door 100 rotates the cover 120 to open the detergent container receiving portion 18 and then inserts the detergent container into the detergent container receiving portion 18.

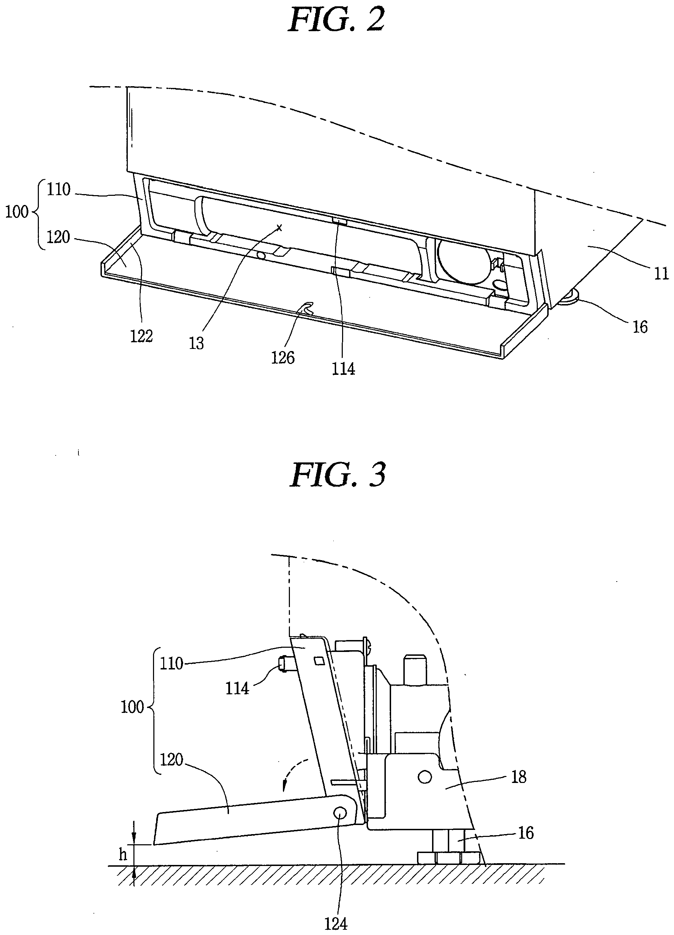

FIGS. 2 and 3 illustrate a shape in which the detergent insert door 100 is opened.

The detergent insert door 100 may include a bracket 110 and a cover 120, and the bracket 110 is coupled and fixed to a front opening portion of the detergent container receiving portion 18, and the cover 120 is hinge-coupled to the bracket 110 at a lower portion thereof, and thus rotatably installed. The cover 120 may rotate on a front surface of the detergent container receiving portion 18 to form the opening or closing of a detergent inlet 13 communicating with a front opening portion of the detergent container receiving portion 18. When the cover 120 is opened for the opening of the detergent inlet, the cover 120 rotates through one side thereof coupled to the bracket 110. The cover 120 may include a hinge coupling portion 125 hinge-coupled to the bracket 110 at a lower portion thereof, and thus the cover 120 may rotate by a predetermined angle with respect to the bracket 110.

In case of a typical detergent insert door 100, a shaft damper 130 and a elastic member 140 do not exist, and when the cover 120 rotates at a high speed toward the floor due to the opening of the detergent insert door 100 to be brought into contact with the floor, there is a concern of causing scratches or damage, and unwanted noise may be generated due to the opening of the detergent insert door 100. Furthermore, the cover 120 may rotate until it is brought into contact with the floor or another object located on the floor without any limited angle, and thus a user may feel difficult to support the cover 120 when he or she closes the cover 120.

The detergent insert door 100 according to the present disclosure is formed by coupling the cover 120 to the bracket 110, wherein the shaft damper 130 and elastic member 140 are used for coupling between the bracket 110 and the cover 120.

For the shaft damper 130, when an upper portion of the cover 120 rotates with respect to the bracket 110, the cover 120 may rotate at a predetermined speed by a resistance of oil located within the shaft damper 130.

A rotation speed of the cover 120 may be determined according to the shaft damper 130, and the rotation speed of the cover 120 is determined according to the characteristics of oil in a cylinder within the shaft damper 130. When the cover 120 is opened, the cover 120 rotates at a predetermined speed by the shaft damper 130, and when rotated more than a set predetermined angle, the elastic member 140 located within the detergent insert door 100 supports the cover 120 to provide an elastic force in an opposite direction to the rotation of the cover 120.

FIG. 3 illustrates a shape in which the cover 120 rotated toward the floor by a predetermined angle is located to be separated from the floor by a predetermined height (h). The body supporting member 16 support the body from the bottom by a predetermined distance. The cover 120 rotates from the bracket 110 by a predetermined angle, and then receives an elastic force due to the elastic member 140 in an opposite direction to a rotating direction thereof to limit the cover 120 from being rotated above a predetermined angle. As a result, the cover 120 may have a predetermined height from the floor, thereby solving the foregoing problem that occurs when the cover 120 of the detergent insert door 100 is brought into contact with the floor.

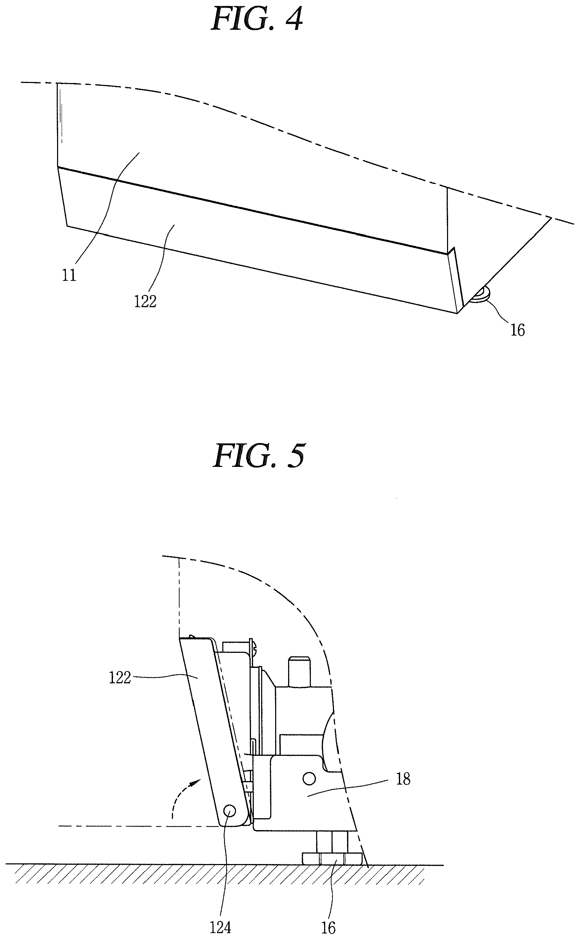

FIGS. 4 and 5 are views illustrating a shape in which the detergent insert door 100 blocks the detergent inlet 13.

A ring portion 126 is located at an upper end of the cover 120, and the ring portion 126 is inserted into a ring fastening portion 114 located at an upper portion of the bracket 110, thereby fixing the cover 120 to the bracket 110. When the cover 120 is coupled to the bracket 110, the cover 120 may be located on a front surface of the detergent inlet to block the detergent inlet, and thus it looks immaculate in the aspect of appearance.

As illustrated in FIG. 5, when the cover 120 is opened, an end of the cover 120 is located to be separated from the floor by a predetermined height, and thus a user may insert his or her finger into a portion having a predetermined height from the floor, and then easily support the cover 120, thereby pulling up the cover 120 and then fixing it to the bracket 110.

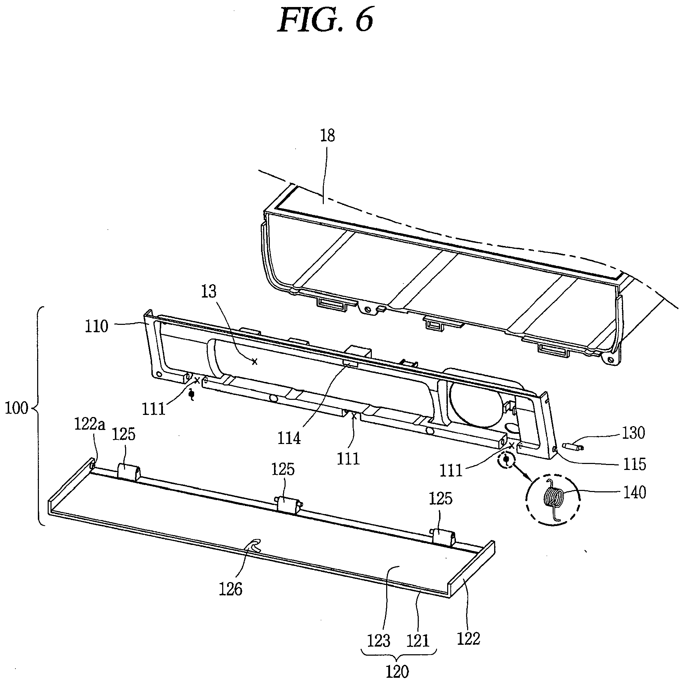

FIG. 6 is an exploded view illustrating each configuration of the detergent insert door 100.

The laundry treating apparatus may include the detergent container receiving portion 18 that is a space capable of inserting the detergent container, and the detergent container receiving portion 18 has a front opening portion on which a front surface is opened. The detergent container may be inserted through the front opening portion.

The detergent insert door 100 may expose the detergent container inlet to an outside or block the detergent container inlet to perform the role of opening or closing the detergent container receiving portion 18. The detergent insert door 100 may include the cover 120, the bracket 110, the shaft damper 130 and the elastic member 140.

The cover 120 rotates with respect to the bracket 110 to form the opening or closing of the detergent container inlet. The cover 120 is inserted into a hinge receiving portion 111 of the bracket 110 and hinge-coupled to the bracket 110, and rotated around a hinge shaft 124 to form the opening or closing the detergent container inlet.

When the cover 120 opens the detergent inlet, the cover 120 rotates with respect to an axis formed by being hinge-coupled to the bracket 110 by a preset angle, and then rotation above a predetermined angle is limited by the elastic member 140 supporting the bracket 110 and cover 120. Here, the preset angle is a value that can be determined by a user. For example, the elastic member 140 applies an elastic force to the cover 120 from the time when the cover 120 rotates approximately 60 degrees with respect to the bracket 110, and when the cover 120 and bracket 110 forms a larger angle, an amount of elastic force provided by the elastic member 140 further increases, and thus when the cover 120 rotates approximately 90 degrees with respect to the bracket 110, it may be possible to set a force applied to the cover 120 due to gravity to equilibrate to an elastic force of the elastic member 140. When the cover 120 and the bracket 110 form about 90 degrees, the user may insert his or her hand below the cover 120, and thus the user may support and then pull up the cover 120 to fix it to the bracket 110.

When the bracket 110 is fastened to the cover 120 by hinge coupling, one side of the shaft damper 130 may be coupled to one side of the cover 120 to limit a rotation speed of the cover 120, thereby limiting the rotation speed of the cover 120.

In other words, when the cover 120 rotates at a predetermined speed by the shaft damper 130, and then reaches a predetermined angle, the rotation thereof is limited and supported by the elastic member 140.

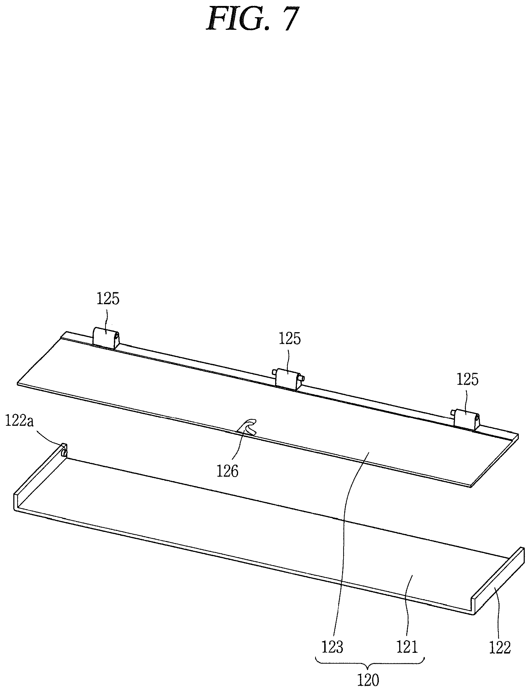

FIG. 7 is a perspective view illustrating a first member 121 and a second member 123 constituting the cover 120.

The cover 120 may include the first member 121 and the second member 123.

The first member 121 performs the role of forming an appearance of the detergent insert door 100 when viewed from an outside perspective. The first member 121 has a typical plate shape, but portions of supporting the bracket 110 protruded and formed toward the bracket 110 are provided at both ends of the first member 121.

The bracket supporting portions 122 may support both lateral surfaces of the bracket 110 to perform the role of allowing the appearance of both lateral surfaces of the bracket 110 to be neatly seen. The bracket supporting portion 122 may include a rotation protrusion 122a protruded and formed toward a central portion of the first member 121 at one side thereof as illustrated in FIG. 7. The rotation protrusion 122a may be accommodated into a portion of receiving the -rotation protrusion 122a formed at a lateral surface of the bracket 110. When the rotation protrusion 122a is accommodated into a portion of receiving the rotation protrusion 122a, the cover 120 may be more efficiently rotated by an action with the rotation protrusion receiving portion 115.

The second member 123 is adhered to a rear surface of the first member 121 to reinforce a strength of the first member 121. A rib formed on the second member 123 may enhance the strength of the first member 121 coupled to the second member 123, and increase durability.

The first member 121 and second member 123 may be adhered and coupled to each other using an adhesive configured with a synthetic resin.

At least one or more hinge coupling portions 125 are provided at a lower portion of the second member 123, and the hinge coupling portion 125 is configured with the hinge shaft 124. The hinge coupling portion 125 is protruded and formed toward the detergent container receiving portion 18 from the bottom to be inserted into the hinge receiving portion 111.

In FIG. 7, it is illustrated a shape in which total three hinge coupling portions 125 are formed at a lower portion of the second member 123, but the present disclosure may not be necessarily limited to this, and the hinge coupling portions 125 may be additionally located at a plurality of positions.

The ring portion 126 inserted into the ring fastening portion 114 of the bracket 110 to be fixed to the bracket 110 is located at an upper portion of the second member 123. When the ring portion 126 is inserted into the ring fastening portion 114 and then a small external force is applied thereto, the ring fastening portion 114 is able to hold the ring portion 126, and thus the second member 123 may be fixed to the bracket 110.

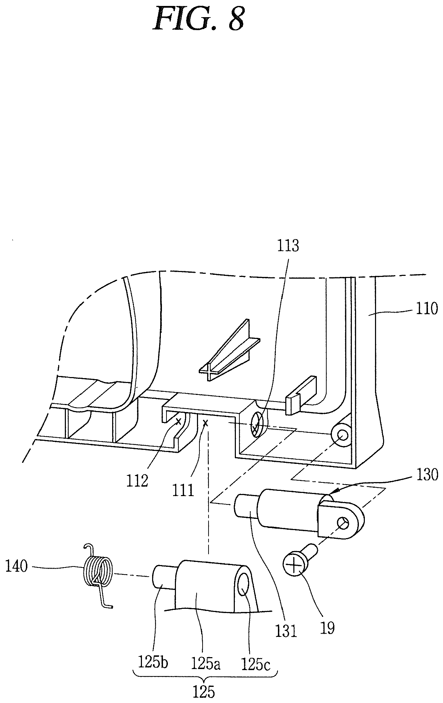

The hinge coupling portion 125 of the second member 123 is illustrated at the bottom of FIG. 8.

The hinge coupling portion 125 may be inserted into the hinge receiving portion 111 of the bracket 110 to form a hinge coupling, thereby allowing the cover 120 to rotate with respect to the bracket 110.

The hinge coupling portion 125 may include a protruding portion 125a, a shaft protrusion 125b, and a shaft damper 130 protrusion receiving portion 125c.

The protruding portion 125a is formed to be inserted into the hinge receiving portion 111 to perform the role of a body of the hinge coupling portion 125.

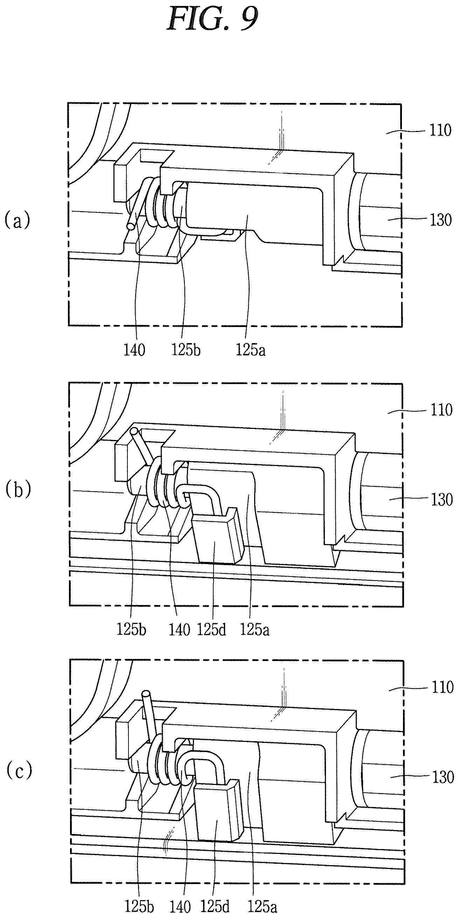

Referring to FIG. 9, it is seen that an elastic member 140 supporting portion 125d configured in a groove shape to accommodate and support one end of the elastic member 140 is formed at one side of the protruding portion 125a.

The shaft protrusion 125b is supported by the bracket 110, and extended along a direction of the shaft damper 130 at one side of the protruding portion 125a to insert the elastic member 140.

The shaft damper protrusion receiving portion 125c is configured in a groove shape, and formed at the other side of the protruding portion 125a to accommodate one end of the shaft damper 130. One end of the shaft damper 130 is inserted into the shaft damper protrusion receiving portion 125c, thereby allowing the shaft damper 130 to control a rotation speed of the cover 120 according to the specification of the shaft damper 130 through the hinge coupling portion 125 of the second member 123.

FIG. 6 illustrates a front portion of the bracket 110, and FIG. 8 illustrates a rear portion of the bracket 110.

The bracket 110 is coupled to a front surface of the detergent container receiving portion 18, and the cover 120 is coupled to the bracket 110 or rotated with respect to bracket 110 to perform the role of opening or closing the detergent container inlet. A shape in which the bracket 110 is coupled to a front surface of the detergent container receiving portion 18 is illustrated in FIGS. 3 and 5. As illustrated in FIGS. 3 and 5, the bracket 110 coupled to a front opening portion of the detergent container receiving portion 18 is located such that an upper portion of the bracket 110 is inclined with respect to a lower portion thereof by a predetermined angle, it is to open the detergent container inlet by inclining the cover 120 to a direction of the floor toward the bottom by itself without any external force when the ring portion 126 located at an upper portion of the cover 120 is released from the ring fastening portion 114 of the bracket 110.

The hinge receiving portion 111 for hinge coupling is provided at a lower portion of the bracket 110. The hinge receiving portion 111 has a depressed shape in a direction from the bottom to the top to hinge-couple the cover 120 to the bracket 110. FIG. 6 illustrates a shape in which total three hinge receiving portions 111 are formed on the bracket 110. However, it is an example in which the cover 120 is coupled to the bracket 110 to implement a stable movement.

FIG. 8 illustrates a rear portion of the bracket 110.

The bracket 110 may include a plurality of hinge receiving portions 111 for hinge coupling at a lower portion thereof. The hinge coupling portion 125 of the second member 123 constituting the cover 120 may be inserted into the hinge receiving portion 111, and thus the hinge receiving portion 111 may be hinge-coupled to the hinge coupling portion 125. Through this, the cover 120 may rotate with respect to a hinge shaft.

The hinge receiving portion 111 may include a cover 120 supporting hole 112 and a shaft damper 130, respectively, at both sides thereof, and a cover supporting hole 112 for allowing the shaft protrusion 125b of the hinge coupling portion 125 to pass therethrough to support and rotate the cover 120 is supported at one side of the hinge receiving portion 111, and a shaft damper insert hole 113 formed to be inserted into the shaft damper 130 receiving portion of the hinge coupling portion 125 to allow the shaft damper 130 to pass therethrough is located at the other side of the hinge receiving portion 111.

The shaft damper 130 is illustrated in FIG. 8.

The shaft damper 130 is located at one side of the bracket 110. The bracket 110 is provided with a space capable of accommodating the shaft damper 130, and the shaft damper 130 may be located in this space and fixed to the bracket 110 using screw fastening. A screw insert hole into which a screw is inserted and fixed to the bracket 110 is located at one side of the shaft damper 130. The shaft damper is provided in a direction of the hinge shaft 124, and one end thereof is coupled to the shaft damper 130 receiving portion of the hinge coupling portion 125 through the shaft damper insert hole 113 to limit a rotation speed of the cover 120.

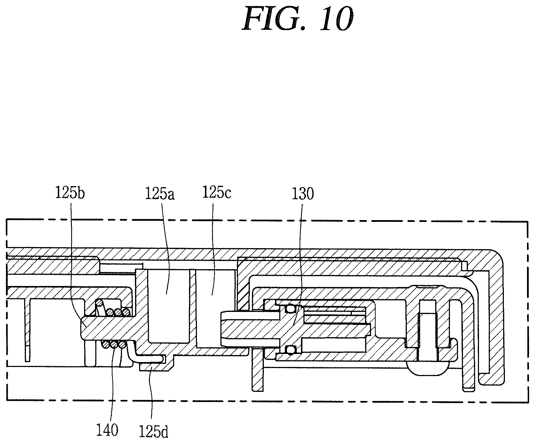

FIGS. 9 and 10 illustrate a shape in which the bracket 110 is coupled to the cover 120.

Referring to FIG. 9, it illustrates a shape in which the hinge coupling portion 125 of the second member 123 constituting the cover 120 is inserted into the hinge receiving portion 111 of the bracket 110, and a positional change of the elastic member 140 due to the rotation of the cover 120 can be seen with reference to the processes of 9A, 9B and 9C.

The elastic member 140 is supported by the bracket 110 and cover 120, respectively, and when the cover 120 rotates above a predetermined angle, the elastic member 140 provides an elastic force acting in a direction opposite to a rotational direction of the cover 120. The elastic member 140 may support at least part of the cover 120 and bracket 110, thereby providing an elastic force.

The elastic member 140 is inserted into the shaft protrusion 125b of the hinge coupling portion 125, and one end thereof is located and fixed to the elastic member supporting portion 125d formed on the protruding portion 125a of the hinge coupling portion 125. In other words, one end thereof is fixed to the elastic member supporting portion 125d, and the other end thereof is rotated above a predetermined angle, thereby being brought into contact with one side of the bracket 110 to provide an elastic force for limiting the rotation of the cover 120.

The elastic member 140 according to the present disclosure may denote a member of being displaced or deformed to have an elastic force, and denote a coil spring 141 or leaf spring 142.

FIG. 10 is a view illustrating a cross-sectional view in which FIG. 9 is cut in a horizontal direction, and it is seen that the hinge coupling portion 125 is located at the hinge receiving portion 111, and the elastic member 140 is inserted into the shaft protrusion 125b of the hinge coupling portion 125, and one end of the shaft damper 130 is accommodated through the shaft damper protrusion receiving portion 125c of the hinge coupling portion 125.

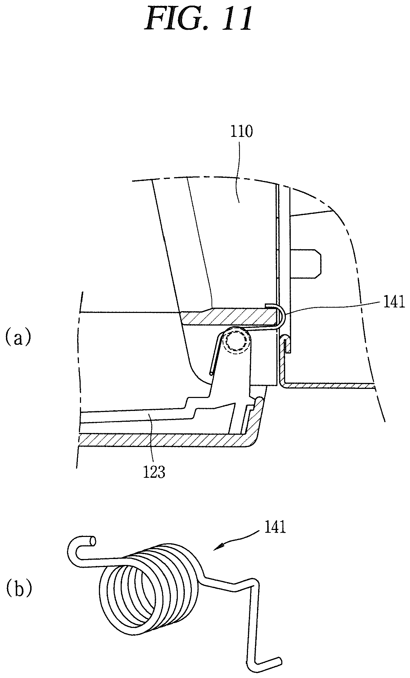

FIG. 11A is a view illustrating a shape in which the cover 120 is supported by the bracket 110 through the coil spring 141, and FIG. 11B is a view illustrating a typical shape of the coil spring 141. The coil spring 141 may provide an elastic force to the detergent insert door while supporting one side of the cover 120 and bracket 110 in the above disclosed method. There is no particular limitation in the shape of a coil spring used in the present disclosure.

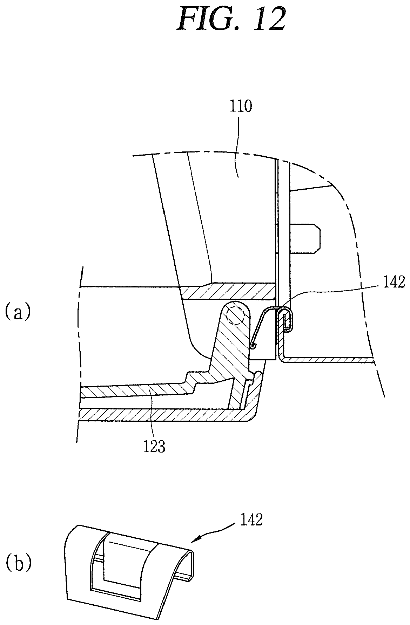

FIG. 12A is a view illustrating a shape in which a cover 120 portion is supported by the bracket 110 due to the leaf spring 142, and FIG. 12B is a view illustrating an example of the leaf spring 142. Even when the leaf spring 142 is used for the elastic member 140, the leaf spring 142 may support one side of the cover 120 and bracket 110 to perform the role of providing an elastic force to the detergent insert door 100, thereby performing the same function as that of the coil spring 141. The leaf spring 142 used in the present disclosure is merely an example, and the leaf spring 142 may have various shapes.

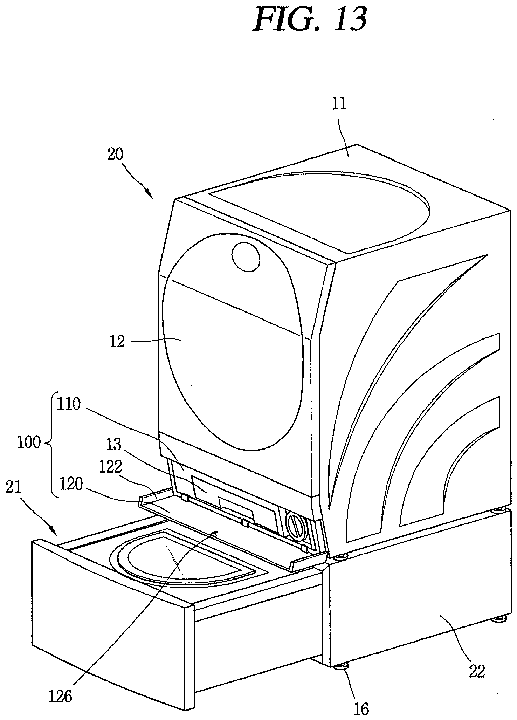

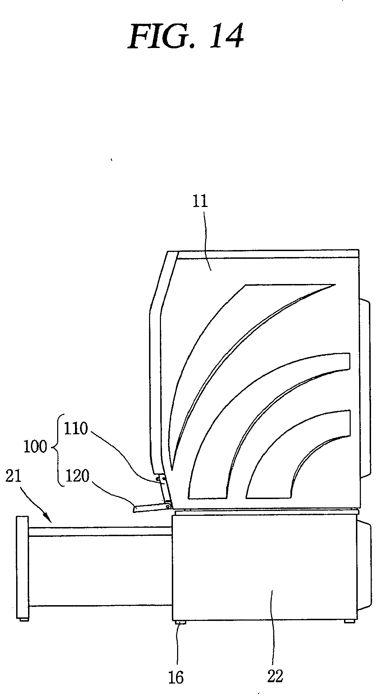

FIGS. 13 and 14 are views illustrating a shape in which a sub-drum is located at a lower portion of the body.

A laundry treating apparatus having the detergent insert door 100 according to the present disclosure may have the foregoing effects even in case where the floor is located at a lower portion of the body as well as an additional sub-drum 21 is located at a lower portion of the body. When an upper portion of the detergent insert door 100 rotates with respect to the detergent inlet to open the detergent inlet, the sub-drum 21 and the detergent insert door 100 may be separated from each other by a predetermined distance, thereby having an advantage of a laundry treating apparatus having the above-described detergent insert door 100.

The configurations and methods according to the above-described embodiments will not be limited to the foregoing laundry treating apparatus having a detergent insert door, and all or part of each embodiment may be selectively combined and configured to make various modifications thereto.

## Claims

1. A laundry treating apparatus, comprising:
a detergent container receiving portion (18) provided at a lower portion of a body (11), and provided with a front opening portion to insert a detergent container; and
a detergent insert door (100) rotatably provided on a front surface of the detergent container receiving portion (18) to open or close the detergent container receiving portion (18),
wherein the detergent insert door (100) comprises:
a bracket (110) coupled to the front opening portion to allow a detergent inlet (13) formed on a front surface thereof to communicate with the front opening portion, and provided with a hinge receiving portion (111) at a lower portion thereof;
a cover (120) comprises one or more hinge coupling portions (125) to be inserted into the hinge receiving portion (111), the cover hinge-coupled to the bracket (110) to open or close the detergent inlet (13);
a shaft damper (130) configured to rotate the cover (120) at a predetermined speed up to a set angle; and
an elastic member (140) configured to provide an elastic force in an opposite direction of rotation when the cover (120) rotates above a set angle based on the bracket to support the cover (120) so as to limit the cover (120) from being bumped to the floor,
**characterized in that**
the cover (120) comprises:
a first member (121) configured to form an appearance of the detergent insert door, and provided with bracket supporting portions (122) protruded and formed toward the bracket (110) at both ends thereof; and
a second member (123) adhered to a rear surface of the first member (121) to reinforce a strength of the first member (121), and provided with a hinge shaft (124) at a lower portion thereof.

2. The laundry treating apparatus of claim 1, wherein the bracket supporting portion (122) comprises a rotation protrusion (122a) protruded and formed toward a central portion of the first member (121) at one side thereof, and formed to be accommodated into the bracket (120) for the rotation of the cover.

3. The laundry treating apparatus of claim 1, or 2, wherein the second member (123) comprises at least one or more hinge coupling portions (125) protruded and formed toward the detergent container receiving portion (18) at a lower portion thereof to be inserted into the hinge receiving portion (111).

4. The laundry treating apparatus of claim 3, wherein the hinge coupling portion (125) comprises:
a protruding portion (125a) inserted into the hinge receiving portion (111);
a shaft protrusion (125b) supported by the bracket (110), and extended along a direction of the hinge shaft (114) at one side of the protruding portion (125a) to insert the elastic member (140); and
a shaft damper protrusion receiving portion (125c) configured in a groove shape and formed at the other side of the protruding portion (125a) to accommodate one end of the shaft damper (130).

5. The laundry treating apparatus of claim 4, wherein the protruding portion (125a) comprises an elastic member supporting portion (125d) configured in a groove shape to accommodate and support the elastic member (140) at one side thereof.

6. The laundry treating apparatus of claim 4, wherein an end of the elastic member (140) is fixed to the elastic member supporting portion (125d), and the other end thereof is brought into contact with one side of the bracket (110) due to rotation above a set angle of the cover to limit the rotation of the cover (120).

7. The laundry treating apparatus of any one of claims 1 to 6, wherein the hinge receiving portion (111) is configured in a depressed shape from the bottom to the top to hinge-couple the cover to the bracket (110).

8. The laundry treating apparatus of any one of claims 1 to 7, wherein a cover supporting hole (112) formed to support and rotate the cover (120) is provided at one side of the hinge receiving portion (111).

9. The laundry treating apparatus of claim 6, wherein a shaft damper insert hole (113) formed to allow the shaft damper (130) to pass therethrough is provided at the other side of the hinge receiving portion (111).

10. The laundry treating apparatus of claim 7, wherein the shaft damper (130) is coupled to the hinge coupling portion (125) through the shape damper (130) insert hole to limit a rotation speed of the cover (120).

11. The laundry treating apparatus of any one of claims 1 to 10, wherein the elastic member (140) is either one of a coil spring and a leaf spring.

12. The laundry treating apparatus of any one of claims 2 to 11, wherein a ring portion protruded and formed to be coupled and fixed to the bracket (110) is provided at an upper end of the second member (123).

## Patentansprüche

1. Wäschebehandlungsvorrichtung, die aufweist:
einen Waschmittelbehälteraufnahmeabschnitt (18), der an einem unteren Abschnitt eines Körpers (11) bereitgestellt ist, und der mit einem vorderen Öffnungsabschnitt bereitgestellt ist, um einen Waschmittelbehälter einzusetzen; und
eine Waschmitteleinsetzklappe (100), die drehbar auf einer vorderen Oberfläche des Waschmittelbehälteraufnahmeabschnitts (18) bereitgestellt ist, um den Waschmittelbehälteraufnahmeabschnitt (18) zu öffnen oder zu schließen,
wobei die Waschmitteleinsetzklappe (100) aufweist:
eine Halterung (110), die mit dem vorderen Öffnungsabschnitt gekoppelt ist, um zu ermöglichen, dass ein Waschmitteleinlass (13), der auf ihrer Vorderseite ausgebildet ist, mit dem vorderen Öffnungsabschnitt in Verbindung steht, und die in ihrem unteren Abschnitt mit einem Gelenkaufnahmeabschnitt (111) versehen ist;
einen Deckel (120), der einen oder mehrere Gelenkkopplungsabschnitte (125) aufweist, die in den Gelenkaufnahmeabschnitt (111) eingesetzt werden sollen, wobei der Deckel mit der Halterung (110) gelenkgekoppelt ist, um den Waschmitteleinlass (13) zu öffnen oder zu schließen;
einen Wellendämpfer (130), der aufgebaut ist, um den Deckel (120) mit einer vorgegebenen Geschwindigkeit bis zu einem festgelegten Winkel zu drehen; und
ein elastisches Element (140), das aufgebaut ist, um eine elastische Kraft in eine entgegengesetzte Drehrichtung bereitzustellen, wenn der Deckel (120) sich basierend auf der Halterung zum Halten des Deckels (120) über den festgelegten Winkel dreht, um den Deckel (120) dabei zu begrenzen, mit dem Boden zusammenzustoßen,
**dadurch gekennzeichnet, dass**
der Deckel (120) aufweist:
ein erstes Element (121), das aufgebaut ist, um ein Erscheinungsbild der Waschmitteleinsetzklappe zu bilden, und das mit Halterungsstützabschnitten (122) versehen ist, die an ihren beiden Enden in Richtung der Halterung (110) vorstehen und ausgebildet sind; und
ein zweites Element (123), das an eine hintere Oberfläche des ersten Elements (121) geklebt ist, um eine Festigkeit des ersten Elements (121) zu verstärken und das an seinem unteren Abschnitt mit einer Gelenkwelle (124) versehen ist.

2. Wäschebehandlungsvorrichtung nach Anspruch 1, wobei der Halterungsstützabschnitt (122) einen Drehvorsprung (122a) aufweist, der an einer seiner Seiten in Richtung eines mittleren Abschnitts des ersten Elements (121) vorsteht und ausgebildet ist und derart ausgebildet ist, dass er für die Drehung des Deckels in der Halterung (120) aufgenommen wird.

3. Wäschebehandlungsvorrichtung nach Anspruch 1 oder 2, wobei das zweite Element (123) wenigstens einen oder mehrere Gelenkkopplungsabschnitte (125) aufweist, die an seinem unteren Abschnitt in Richtung des Waschmittelbehälteraufnahmeabschnitts (18) vorstehen und ausgebildet sind, um in den Gelenkaufnahmeabschnitt (111) eingesetzt zu werden.

4. Wäschebehandlungsvorrichtung nach Anspruch 3, wobei der Gelenkkopplungsabschnitt (125) aufweist:
einen vorstehenden Abschnitt (125a), der in den Gelenkaufnahmeabschnitt (111) eingesetzt ist;
einen Wellenvorsprung (125b), der von der Halterung (110) gehalten wird und der auf einer Seite des vorstehenden Abschnitts (125a) entlang einer Richtung der Gelenkwelle (114) verlängert ist, um das elastische Element (140) einzusetzen; und
einen Wellendämpfervorsprung-Aufnahmeabschnitt (125c), der in einer Nutform aufgebaut ist und auf der anderen Seite des vorstehenden Abschnitts (125a) ausgebildet ist, um ein Ende des Wellendämpfers (130) aufzunehmen.

5. Wäschebehandlungsvorrichtung nach Anspruch 4, wobei der vorstehende Abschnitt (125a) einen elastischen Elementhalteabschnitt (125d) aufweist, der in einer Nutform aufgebaut ist, um das elastische Element (140) auf einer seiner Seiten aufzunehmen und zu halten.

6. Wäschebehandlungsvorrichtung nach Anspruch 4, wobei ein Ende des elastischen Elements (140) an dem elastischen Elementhalteabschnitt (125d) befestigt ist, und sein anderes Ende aufgrund einer Drehung über einen festgelegten Winkel des Deckels in Kontakt mit einer Seite der Halterung (110) gebracht wird, um die Drehung des Deckels (120) zu begrenzen.

7. Wäschebehandlungsvorrichtung nach einem der Ansprüche 1 bis 6, wobei der Gelenkaufnahmeabschnitt (111) in einer von der Unterseite zu der Oberseite vertieften Form aufgebaut ist, um den Deckel mit der Halterung (110) gelenkzukoppeln.

8. Wäschebehandlungsvorrichtung nach einem der Ansprüche 1 bis 7, wobei ein Deckelhalteloch (112), das ausgebildet ist, um den Deckel (120) zu halten und zu drehen, auf einer Seite des Gelenkaufnahmeabschnitts (111) bereitgestellt ist.

9. Wäschebehandlungsvorrichtung nach Anspruch 6, wobei ein Wellendämpfereinsetzloch (113), das ausgebildet ist, um zu ermöglichen, dass der Wellendämpfer (130) hindurchgeht, an der anderen Seite des Gelenkaufnahmeabschnitts (111) bereitgestellt ist.

10. Wäschebehandlungsvorrichtung nach Anspruch 7, wobei der Wellendämpfer (130) durch das Einsetzloch des Formdämpfers (130) mit dem Gelenkkopplungsabschnitt (125) gekoppelt ist, um eine Drehgeschwindigkeit des Deckels (120) zu begrenzen.

11. Wäschebehandlungsvorrichtung nach einem der Ansprüche 1 bis 10, wobei das elastische Element (140) entweder eine Spiralfeder oder eine Blattfeder ist.

12. Wäschebehandlungsvorrichtung nach einem der Ansprüche 2 bis 11, wobei ein Ringabschnitt, der vorsteht und ausgebildet ist, um mit der Halterung (110) gekoppelt und daran befestigt zu werden, an einem oberen Ende des zweiten Elements (123) bereitgestellt ist.

## Revendications

1. Appareil de traitement de linge, comprenant :
une partie de réception de récipient pour détergent (18) fournie au niveau d'une partie inférieure d'un corps (11), et pourvue d'une partie d'ouverture avant pour insérer un récipient pour détergent ; et
une porte d'insertion de détergent (100) fournie de manière rotative sur une surface avant de la partie de réception de récipient pour détergent (18) pour ouvrir ou fermer la partie de réception de récipient pour détergent (18),
dans lequel la porte d'insertion de détergent (100) comprend :
une plaque-support (110) couplée à la partie d'ouverture avant pour permettre à une entrée de détergent (13) formée sur une surface avant de celle-ci de communiquer avec la partie d'ouverture avant, et pourvue d'une partie de réception de charnière (111) au niveau d'une partie inférieure de celle-ci ;
un capot (120) comprend une ou plusieurs parties de couplage de charnière (125) à insérer dans la partie de réception de charnière (111), le capot étant couplé par charnière à la plaque-support (110) pour ouvrir ou fermer l'entrée de détergent (13) ;
un amortisseur d'arbre (130) configuré pour faire tourner le capot (120) à une vitesse déterminée jusqu'à un angle prédéfini ; et
un élément élastique (140) configuré pour fournir une force élastique dans une direction opposée de rotation quand le capot (120) tourne au-delà d'un angle prédéfini sur la base de la plaque-support pour supporter le capot (120) afin de limiter le choc du capot (120) sur le sol,
**caractérisé en ce que**
le capot (120) comprend :
un premier élément (121) configuré pour former une apparence de la porte d'insertion de détergent, et pourvu de parties de support de plaque-support (122) faisant saillie et formées vers la plaque-support (110) à ses deux extrémités ; et
un second élément (123) fixé à une surface arrière du premier élément (121) pour renforcer une résistance du premier élément (121), et pourvu d'un arbre de charnière (124) au niveau d'une partie inférieure de celui-ci.

2. Appareil de traitement de linge selon la revendication 1, dans lequel la partie de support de plaque-support (122) comprend une saillie de rotation (122a) faisant saillie et formée vers une partie centrale du premier élément (121) au niveau d'un côté de celle-ci, et formée pour être logée dans la plaque-support (120) pour la rotation du capot.

3. Appareil de traitement de linge selon la revendication 1, ou 2, dans lequel le second élément (123) comprend au moins une ou plusieurs parties de couplage par charnière (125) faisant saillie et formée(s) vers la partie de réception de récipient pour détergent (18) au niveau d'une partie inférieure de celui-ci à insérer dans la partie de réception de charnière (111).

4. Appareil de traitement de linge selon la revendication 3, dans lequel la partie de couplage par charnière (125) comprend :
une partie faisant saillie (125a) insérée dans la partie de réception de charnière (111) ;
une saillie d'arbre (125b) supportée par la plaque-support (110), et se prolongeant le long d'une direction de l'arbre de charnière (114) au niveau d'un côté de la partie faisant saillie (125a) pour insérer l'élément élastique (140) ; et
une partie de réception de saillie d'amortisseur d'arbre (125c) configurée sous la forme d'une rainure et formée au niveau de l'autre côté de la partie faisant saillie (125a) pour loger une extrémité de l'amortisseur d'arbre (130).

5. Appareil de traitement de linge selon la revendication 4, dans lequel la partie faisant saillie (125a) comprend une partie de support d'élément élastique (125d) configurée sous la forme d'une rainure pour loger et supporter l'élément élastique (140) au niveau d'un côté de celui-ci.

6. Appareil de traitement de linge selon la revendication 4, dans lequel une extrémité de l'élément élastique (140) est fixée à la partie de support d'élément élastique (125d), et l'autre extrémité de celui-ci est mise en contact avec un côté de la plaque-support (110) en raison d'une rotation au-delà d'un angle prédéfini du capot pour limiter la rotation du capot (120).

7. Appareil de traitement de linge selon l'une quelconque des revendications 1 à 6, dans lequel la partie de réception de charnière (111) est configurée sous une forme surbaissée à partir du bas vers le haut pour coupler par charnière le capot à la plaque-support (110).

8. Appareil de traitement de linge selon l'une quelconque des revendications 1 à 7, dans lequel un orifice de support de capot (112) formé pour supporter et faire tourner le capot (120) est fourni au niveau d'un côté de la partie de réception de charnière (111).

9. Appareil de traitement de linge selon la revendication 6, dans lequel un orifice d'insertion d'amortisseur d'arbre (113) formé pour permettre à l'amortisseur d'arbre (130) de passer à travers celui-ci est fourni au niveau de l'autre côté de la partie de réception de charnière (111).

10. Appareil de traitement de linge selon la revendication 7, dans lequel l'amortisseur d'arbre (130) est couplé à la partie de couplage par charnière (125) par l'intermédiaire de l'orifice d'insertion d'amortisseur de forme (130) pour limiter une vitesse de rotation du capot (120).

11. Appareil de traitement de linge selon l'une quelconque des revendications 1 à 10, dans lequel l'élément élastique (140) est l'un ou l'autre parmi un ressort hélicoïdal et un ressort à lame.

12. Appareil de traitement de linge selon l'une quelconque des revendications 2 à 11, dans lequel une partie annulaire faisant saillie et formée pour être couplée et fixée à la plaque-support (110) est fournie au niveau d'une extrémité supérieure du second élément (123).
